# EUROPEAN PATENT APPLICATION

(11) **EP 3 656 531 A1**
(43) Date of publication of application: **27.05.2020**
(21) Application number: 18207646.3
(22) Date of filing: 21.11.2018
(51) Int. Cl.: B29C 48/45, B29C 64/106, B29C 48/395, B29C 48/02, B29C 48/05, B29C 48/285, B29C 48/25, B29C 48/80

(54) **EXTRUDER DEVICE FOR 3D PRINTING**

(71) Applicant: Technische Universität München, 80333 München (DE)
(72) Inventor: ABSTREITER, Tobias, 84435 Lengdorf (DE); KOPPENDORFER, Peter, 85247 Schwabhausen (DE)
(74) Representative: Hoefer & Partner Patentanwälte mbB

(57) **Abstract**

The invention regards an extruder device (1) comprising a screw conveyer (2) extending along a middle axis (100) and being provided within a housing (3) in an axial movable manner, a driving element (5) for moving the screw conveyer (2) in the axial manner, and a heater (13) for heating raw material, the screw conveyer (2) being configured to convey the raw material through the housing (3) and to extrude the raw material via an opening (4) of the housing (2) when being rotated around the middle axis (100) in a working direction and the screw conveyer (2) being configured to stop extruding the raw material when being axially moved away from the opening (4) to decrease pressure inside the housing (2).

## Description

The invention regards an extruder device. Such extruder devices can be used for 3D printing. In order to ensure that raw material stops from being extruded from the extruder device, a screw conveyer provided within the extruder device is moved in an axial manner in order to relief pressure within the extruder device. In this way, the raw material can efficiently be stopped from being extruded.

An injection molding device including axial movability of a worm screw is known from DE 42 06 966 A1. In this document, a worm screw is provided for compressing raw material in order to increase the pressure within a housing. The raw material is then injected into a mold by axial movement of the worm screw. However, in this document, a dog clutch has to be operated in order to activate or deactivate axial movement of the worm screw thereby rendering the device complicated to manufacture and complex to use.

It is an object underlying the invention to provide an extruder device for extruding raw material in a simplified manner, particularly without dripping when extruding is stopped.

The object is solved by the features of the independent claim. The dependent claims contain advantageous embodiments of the invention.

The object is solved by an extruder device which is particularly weight optimized and adapted for 3D printing. Said extruder device comprises a screw conveyer and a driving element. Screw conveyers are known from prior art as devices which do not compress the conveyed material. The screw conveyer is provided within a housing and extends along a middle axis. The screw conveyer can be rotated with respect to the housing around the middle axis. Additionally, the screw conveyer can be moved along the middle axis such as to axially displace the screw conveyer with respect to the housing. Preferably, the screw conveyer may be a stuffing screw. The driving element is provided for moving the screw conveyer at least in the axial manner. In case the screw conveyer is rotated around the middle axis in a working direction, raw material is conveyed through the housing and is extruded via an opening of the housing. Said opening preferably has a diameter between 0.1 mm and 5.0 mm, more preferably between 0.3 mm and 3.0 mm. In this way, the extruder device can be used as 3D printing head for printing the raw material onto a surface. Additionally, a heater is provided for heating the raw material. Preferably, said heater is arranged within or attached to the housing and/or the screw conveyer in order to heat the raw material, particularly to melt the raw material. Preferably, the major part of the energy required for heating or melting the raw material is provided by the heater and only a minor part provided by friction between raw material, housing and screw conveyer. The raw material preferably is granulate material and thus is cheaper than other raw materials used for 3D printing like filaments. Particularly, the screw conveyer is configured to continuously convey the raw material through the housing while the raw material is heated and to extrude the raw material via the opening when being rotated around the middle axis in the working direction. Therefore, the raw material can be extruded as long as the screw conveyer is rotated. Preferably, axial movement is not performed for extruding the raw material. The transport capacity is preferably constant along the screw conveyer. The raw material may be inserted via a single inlet or may be provided via several inlets which are provided along the middle axis. One or several of the inlets may be adapted to mix additives to the raw material wherein said one or more inlets preferably are provided at a position along the middle axis, at which the raw material is already in a molten state.

In order to stop extruding the raw material via of the opening of the housing, the screw conveyer is axially moved away from the opening to decrease pressure within the housing. Said stopping can be performed in a rather quick manner so as to allow highly accurate printing. This is beneficial in additive fabrication since extruding has to be stopped several times to reposition the extruder device in case the extruder device is used as printing head.

Preferably, the screw conveyer comprises a worm shaft, wherein a thread is provided on an outer surface of the worm shaft. The worm shaft preferably has a constant diameter (along its length) such that the screw conveyer is a single-zone screw conveyer. In an alternative embodiment, the screw conveyer does not comprise any shaft and only a thread is provided. Preferably, the screw conveyer is configured to generate a constant pressure on the raw material within the housing.

A wall thickness of the housing may be between 0.5 mm and 10.0 mm, preferably between 1.0 mm and 5.0 mm, more preferably between 1.5 mm and 3.0 mm. The housing may be provided with thin walls, since no pressurization of the raw material is needed as in injection molding devices. The screw conveyer just conveys the raw material through the housing such that the housing is not exposed to large pressures.

A length of the screw conveyer may be at least 5 times, preferably at least 10 times, the diameter of the screw conveyer. This particular screw conveyer causes a turbulent flow of the, particularly molten, raw material within the extruder device. Particularly, the screw conveyer may be configured to mix different raw materials, which are provided as granulates and/or powder and/or fluids, to a homogenous mixture which is extruded via the opening.

Preferably, the screw conveyer is configured to generate a pressure within the housing lower than 100 bar, preferably lower than 50 bar, more preferably lower than 10 bar. It is particularly preferred that a pressure generated by the screw conveyer is lower than 1 bar, particularly between 0.1 bar and 0.5 bar. Due to the reduced pressure, a driving power of the driving element may be lower than 1000 W, preferably lower than 500 W, more preferably lower than 250 W.

A flow rate through the opening may be at least 100 g/h, preferably at least 250 g/h, more preferably at least 500 g/h. This is particularly preferable when using the extruder device as 3D printing head in order to allow fast additive fabrication.

In a preferred embodiment, a cross sectional area of the screw conveyer is constant along the middle axis. This allows conveying raw material with constant volume within one volition of the screw. Hence, the screw conveyer has a shape which is the same along the middle axis.

Preferably, the driving element is a spindle and is connected to the screw conveyer via a nut which is manufactured to correspond to the driving element. Hence, the driving element is guided in said nut. The axial displacement as explained above is reached by specific arrangement of nut, screw conveyer and driving element. Preferably, the nut is fixed to the screw conveyer such that axial movement of the nut and the screw conveyer along the middle axis is coupled. This means that no relative movement between the nut and the screw conveyer in axial direction is possible. In other words, a displacement of the nut in axial direction will inevitably cause an axial displacement of the screw conveyer. Regarding rotational movement, the nut and the screw conveyer are at least partially coupled. Particularly, rotational movement of the nut and the screw conveyer is coupled at least in the working direction. This means that rotating the nut in the working direction will cause rotation of the screw conveyer in the rotating direction of the nut as well. In this way, on the one hand, the nut can cause rotation of the screw conveyer in order to extrude the raw material via the opening of the housing, while on the other hand, the nut can cause axial displacement of the screw conveyer in order to stop extruding the raw material via said opening. In a preferred embodiment, the nut is fixed to the screw conveyer to prevent any rotational movement between the screw conveyer and the nut. In an alternative embodiment, a gearing is provided between the nut and the screw conveyer. Said gearing preferably is a planetary gear. Said gearing may define a gear ration between the driving element and the screw conveyer such that the driving element and the screw conveyer may rotate with different rotational speeds and/or in different directions.

Additionally or alternatively, the driving element, which preferably is a spindle, may have a stopper for blocking relative movement of the driving element and the nut when the driving element is rotated in the working direction and when the driving element and the nut are arranged in a predetermined relative position. Hence, the driving element and the nut are arranged in a self-blocking manner when being in said predetermined relative position. Rotating the driving element in said predetermined relative position in the working direction thus causes the nut and the screw conveyer to rotate in said working direction. In this way, the raw material can be extruded via the opening of the housing. As soon as the driving element is rotated in a retreat direction opposite to the working direction, the nut can travel along the driving element thereby moving the screw conveyer axially along the middle axis.

In the extruder device according to the embodiment of the invention as described before, no active operation is necessary to move or not to move the screw conveyer in an axial manner. On the contrary, the stopper allows rotating the driving element in different directions in order to switch between a working state and a retreating state of the screw conveyer without the need of actuating any further element. Thus, the extruder device has a simple design and can be used in a simplified manner.

In a preferred embodiment, the predetermined relative position is such that the stopper abuts the nut or a part of the screw conveyer. Hence, the driving element cannot be rotated with respect to the nut since such a rotation would cause axial movement of the nut with respect to the driving element which is prevented by the stopper. The stopper only prevents relative rotation in the working direction while at the same time the driving element can be rotated in the retreat direction in order to axially move the nut and the screw conveyer. The stopper is preferably fixed to the driving element and extends radially with respect to the middle axis.

Further preferred, the stopper comprises an axial bearing for abutting the nut. Thus, relative movement between the nut and the stopper can be compensated via said axial bearing. Thus, the lifetime of the stopper and the nut can be increased.

The stopper is preferably provided at an end of the driving element facing the screw conveyer. In a further preferred embodiment, the stopper is a cap element mounted on said end of the driving element. Therefore, the nut is prevented from being removed from the driving element due to rotation of the driving element in the working direction. As soon as the nut reaches said end of the driving element, the nut rotates together with the driving element such that the screw conveyer is driven in the working direction.

The extruder device particularly comprises a one-way clutch. Said one-way clutch is provided between the nut and a non-moving element. The non-moving element may be a casing of the extruder device. In any way, the non-moving element is configured to be fixed with respect to the nut. The one-way clutch allows rotation in the working direction only. As soon as the driving element is rotated in the retreat direction, the one-way clutch blocks rotation of the nut and the screw conveyer such that the driving element rotates with respect to the nut thereby causing the nut traveling along the middle axis such that the screw conveyer is retracted and pressure within the housing is relieved. In case the driving element is rotated in the working direction, the one-way clutch allows rotation of the nut and the screw conveyer such that the screw conveyer is allowed to rotate and to extrude the raw material out of the opening of the housing.

The screw conveyer and the driving element are preferably arranged in a coaxial manner along the middle axis. In this way, the design of the extruder device is simplified because the extruder device only has exactly one rotating axis around which the driving element and the screw conveyer can be rotated.

In a preferred embodiment, the housing comprises an inner wall facing the screw conveyer. Said inner wall may be textured and/or perforated and/or has a friction-increasing coating. It was surprisingly found that due to a textured and/or perforated inner wall and/or due to an inner wall that has a friction-increasing coating material of medium hardness and medium or low frictional coefficient can be conveyed by the screw conveyor in a homogenous and unpressurized manner. A medium or low frictional coefficient is particularly lower than that of the thermoplastic elastomers like TPU, PEBA and TPE, which have a high frictional coefficient. Material having a lower frictional coefficient than that of thermoplastic elastomers can be handled in a simplified manner by increasing the friction between inner wall and material by texturing and/or perforating the inner wall and/or by providing a friction-increasing coating, at least along a section. Such materials preferably are PLA, ABS, PC, ABS/PC-Blend, PETG, HIPS, PE, PA6, PA6.6, PA12, PA11, PA612, PA46, PPA, POM, PVC, TPU, TPE, PVA, PEI, PEI/PC-blend, PSU, PPSU, PESU, PEEK, PEK, PEKK, PEAK, PP, ASA, PBT, PK, PMMA, PPS or PFA. Such materials also comprise blends made from said polymers as well as organic and/or inorganic reinforced compounds made from one or more of these polymers. Preferably, the inner wall is textured and/or perforated and/or provided with a friction-increasing coating by engrailing and/or knurling and/or milling and/or etching and/or coating and/or threading and/or punching and/or lasing and/or plasma treating and/or plasma coating and/or flame spraying and/or cold spraying and/or laser coating and/or electron beam treating and/or electron beam coating.

In another preferred embodiment, the driving element is a ballscrew. Such ballscrews provide low friction and high accuracy. Therefore, the input torque required for driving the driving element and thus the screw conveyer is minimized.

The driving element and the screw conveyer may have threads orientated in the same direction. Hence, when rotating the driving element in the working direction, the stopper causes the screw conveyer to also rotate in the working direction, in case the nut and the driving element are in said predetermined relative position. In this case, the raw material is carried by the screw conveyer along the middle axis to the opening of the housing. In case the driving element is rotated in an opposite direction, i.e. the retreat direction, the nut can travel along the driving element thus retreating the screw conveyer. When again rotating the driving element in the working direction, the nut travels back to said predetermined relative position, in which the stopper preferably abuts the nut, and thus pushes the screw conveyer back to a working position.

Particularly, the extruder device further comprises a drive motor coupled to the driving element. The drive motor is configured for driving the driving element. Due to the stopper, the whole movement of the screw conveyer, i.e. the rotational and the axial movement of the screw conveyer, can be initiated via the drive motor. In case the drive motor rotates the driving element in the working direction, the screw conveyer is pushed to the working position and rotates such that raw material is extruded via the opening of the housing. In case the drive motor rotates the driving element in the retreat direction, the screw conveyer is retracted and relieves pressure within the housing in order to stop raw material being extruded via the opening.

Additionally or alternatively, a ratio between thread depth and thread width of the screw conveyer may be between 0.2 and 5. Preferably, said ratio is constant. Thus, the screw conveyer mainly carries the raw material to the opening and does not compress the raw material and/or does not increase the inner pressure within the housing.

Further details and advantages of the invention are described together with the attached drawings. In the drawings
- Fig. 1: is a first schematic view of an extruder device according to an embodiment of the invention from,
- Fig. 2: is a second schematic view of the extruder device according to the embodiment of the invention,
- Fig. 3: is a third schematic view of the extruder device according to the embodiment of the invention,
- Fig. 4: is a schematic view of a worm screw according to the prior art,
- Fig. 5: is a schematic view of a screw conveyer for use with the extruder according to the embodiment of the invention, and
- Fig. 6: is a schematic view of an alternative screw conveyer for use with the extruder according to the embodiment of the invention.

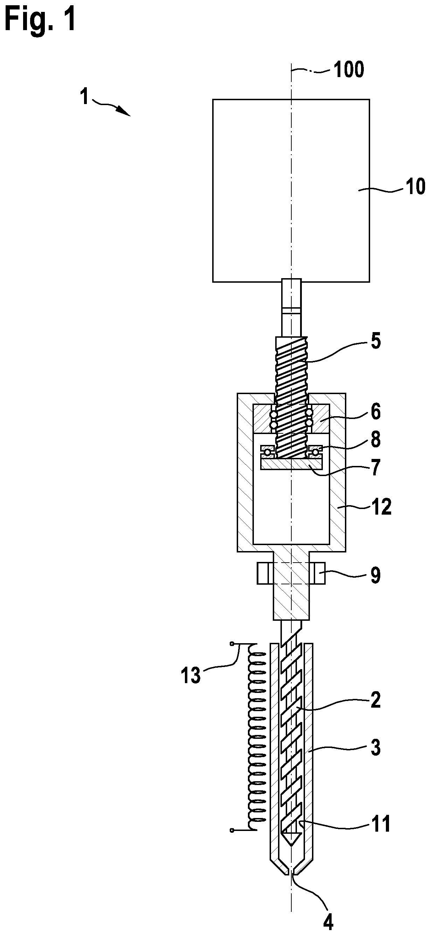

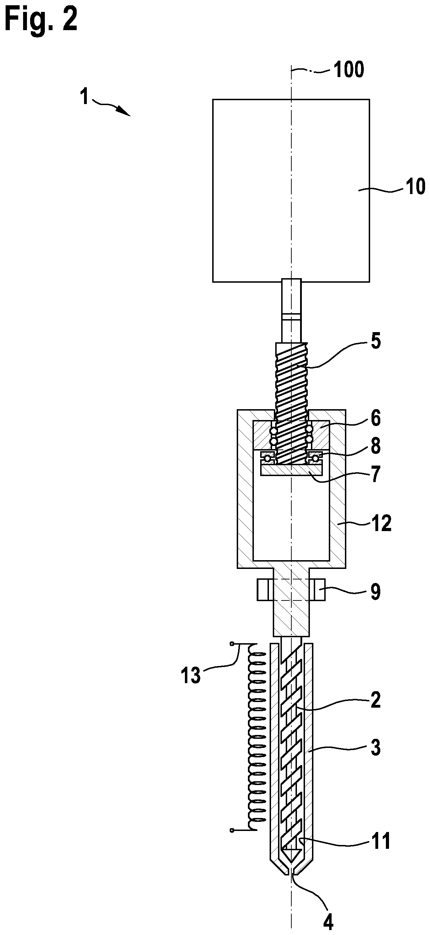

Figure 1 is a schematic view of an extruder device 1 according to a preferred embodiment of the invention. The extruder device 1 is particularly configured to function as printer head for 3D printing. The extruder device 1 comprises a screw conveyer 2 extending along a middle axis 100 which is provided inside a housing 3. The screw conveyer 2 is configured to convey raw material through the housing 3 along the middle axis and to extrude the same via an opening 4 of the housing 3. Such a state is shown in figure 2. The raw material can be provided via one or more inlets (not shown) along the middle axis. Preferably, raw material and/or additives are provided via one of the inlets provided at a position along the middle axis 100, at which the raw material inside the housing 3 is already in a molten or plastically modified state. The screw conveyor 2 used to mix the materials provided via the inlets which will be described below.

Preferably, the opening 4 of the housing 3 forms a nozzle. Further preferred, the housing 3 comprises an exchangeable nozzle. In an advantageous embodiment, the opening 4 of the housing 3 has a diameter between 0.1 mm and 5.0 mm, preferably between 0.3 mm and 3.0 mm. The nozzle may have a perforated outer surface or may be provided with a textured surface. Particularly, the nozzle may feature V-shaped groves which cause an increased surface of the extruded material when the nozzle is moved over a base plate on which the extruded material is to be placed. Hence, the nozzle functions like a notched trowel. This improves binding of consecutive layers of a 3D printing process.

When the extruder device 1 is used as printer head, the raw material is extruded via the opening 4 in order to print a predetermined pattern onto a build platform or onto a layer of previously extruded/printed raw material. The raw material preferably is granulate material which is melted by a heater 13 provided within, on or next to the housing 3. The heater can also be part of the screw conveyer 2. The heater 13 preferably heats the raw material to a temperature which is constant along the axial length of the screw conveyer 2. In addition, it is preferred that the granulate material is melted as soon as it enters the housing 3. The housing 3 can be provided with several sensors (not shown) in order to monitor the printing process. These sensors may comprise temperature sensors and/or pressure sensors and/or flow sensors and/or force sensors and/or path sensors and/or laser sensors.

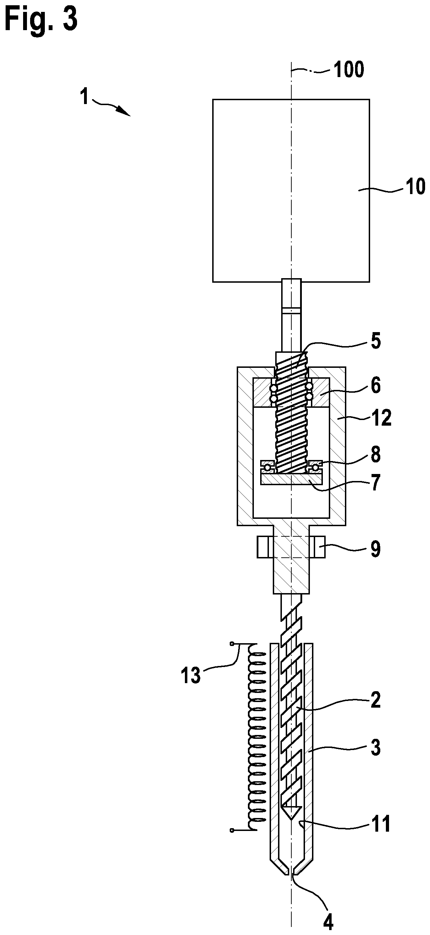

As soon as the printing process is to be stopped, pressure has to be relieved within the housing 3 in order to prevent further raw material from being extruded via the opening 4. In order to receive highly accurate printing results, said pressure has to be relieved in a very quick manner. Therefore, the screw conveyer 2 can be retracted by moving it away from the opening 4 (along the middle axis 100). This is shown in figure 3.

In order to simplify the movements of the screw conveyer 2, the extruder device 1 comprises a driving element 5, which is a spindle, and a nut 6. The driving element 5 is driven by a drive motor 10. The nut 6 is fixed to the screw conveyer 2 such that no relative movement is possible between the nut 6 and the screw conveyer 2. The nut 6 is provided on the driving element 5 wherein the driving element 5 is built as a ballscrew. Thus, the nut 6 can travel along the driving element 5 in a low friction manner with high accuracy.

The nut 6 and the screw conveyer 2 are connected via a connection element 12. The connection element 12 may alternatively be part of the screw conveyer 2 or of the nut 6. The connection element 12 is fixed to a non-moving element like a casing of the extruder device 1 via a one-way clutch 9. The one-way clutch 9 allows rotational movement of the connection element 12 and thus of the nut 6 and of the screw conveyer 2 in only one direction, i.e. the working direction. Rotation in the retreat direction is prevented via the one-way clutch 9.

At an end of the driving element 5, which faces the screw conveyer 2, a stopper 7 is arranged. The stopper 7 particularly is a cap mounted to the driving element 5 and extending in radial direction. Thus, the nut 6 is prevented from being removed by rotating the driving element 5 in the working direction. On the contrary, as soon as the nut 6 gets into a state in which the stopper 7 abuts the nut 6, rotation of the driving element 5 in the working direction with respect to the nut 6 is prevented. Thus, the nut 6 rotates together with the driving element 5 in the working direction. In this way, it is possible to rotate the screw conveyer 2 in the working direction and thus to extrude the raw material via the opening 4.

In order to prevent damage of the stopper 7 and/or the nut 6 as well as to reduce a release torque, an axial bearing 8 is provided on the stopper 7 which is configured to abut the nut 6. The axial bearing 8 therefore allows compensation of relative rotation between the stopper 7 and the nut 6.

In case the drive motor 10 rotates the driving element 5 in the retreat direction, i.e. opposite to the working direction, the driving element 5 cannot drive the nut 6 and the screw conveyer 2 anymore. On the one hand, the stopper 7 does not have the same effect anymore, on the other hand, the one-way clutch 9 prevents rotational movement in the retreat direction. Thus, the nut 6 remains fixed and does not rotate anymore. This causes the nut 6 to travel along the rotating driving element 5 such that the screw conveyer 2 is pulled away from the opening 4. In this way, pressure within the housing 3 is relieved and extrusion of raw material via the opening 4 is stopped immediately.

Hence, extrusion of raw material via the opening 4 can be controlled via the drive motor 10 only. Particularly, the drive motor 10 can cause extruding the raw material via rotating the driving element 5 in the working direction. This will cause the screw conveyer 2 to be pushed into the direction of the opening 4 until the stopper 7 abuts the nut 6. Additionally, the screw conveyer 2 is rotated in order to carry the raw material to the opening 4. On the other hand, the drive motor 10 can cause pressure relief within the housing 3 by rotating the driving element 5 in the retreat direction. In this case, the nut 6 and the screw conveyer 2 are prevented from being rotated and the nut 6 pulls the screw conveyer 2 away from the opening 4. This releases pressure within the housing 3 and causes an immediate stop of extruding the raw material via the opening 4. In both cases, no further actuation of any additional means is necessary. Hence, the extruder device 1 has a simple design and can be driven in a simplified manner while allowing high accuracy in printing processes.

In another embodiment, a spring element may be provided. Said spring element may be arranged between the stopper 7 and the nut 6 and/or between the nut 6 and the inner wall of the connection element 12 next to the one-way clutch 9. This provides a self-regulating system which is based on the pressure within the housing 3. Particularly, said pressure can be maintained within a predefined range, preferably can be kept constant. In a further preferred embodiment, a configurable actuator, for example a pneumatic actuator, may be provided to maintain a pressure within the housing 3 that can be set individually.

The extruded raw material is preferably printed onto a build plate which can be heated during extruding. After extruding the preferably molten raw material the extruded raw material can be cooled. Therefore, a cooling device is provided in an advantageous embodiment of the invention. The cooling device may provide air circulation and may comprise a fan or the like. Such a cooling device is particularly preferable since a large amount of raw material can be extruded when using the extruder device described above. Hence, the cooling device helps to ensure that the extruded raw material has changed from a molten to a solid state before another layer of extruded raw material is added.

When using the extruder device 1 for 3D printing, several layers of extruded raw material are placed on each other in order to generate a three-dimensional structure. Said structure can be machined, for example with a milling machine, during printing or after the printing process. Machining the extruded raw material during printing particularly means that said one or more layers are machined before the next layer is added. Further, the raw material can be extruded to any other base body made from the same material as the raw material used for extruding or any other material. Said base body may be manufactured by extruding or any other manufacturing process like molding.

The structures manufactured by extruding raw material with the described extruder device 1 can undergo post-processing. For example, the generated structures can be tempered and/or painted and/or coated and/or functionalized and/or machined and/or ground and/or polished and/or thermal formed and/or glued and/or undergo physical or chemical planing. The generated structure may also be manipulated in a pyrolytic manner. This particularly comprises chemical or physical de-bounding with a following sinter process.

Additionally, in order to better handle raw material having a medium hardness and a medium or low frictional coefficient, the housing 3 includes a textured and/or perforated inner wall 11 facing the screw conveyer 2. Such materials particularly are polylactide or acrylonitrile butadiene styrene. Preferably, the inner wall 11 is textured and/or perforated by engrailing and/or knurling and/or milling and/or etching and/or coating and/or threading and/or punching and/or lasing and/or plasma treating and/or plasma coating and/or flame spraying and/or cold spraying and/or laser coating and/or electron beam treating and/or electron beam coating.

In figures 1 to 3, an embodiment is shown in which a spindle is used as driving element 5. In another embodiment, a linear actuator may be used as driving element 5 in order to move the screw conveyer 2 along the middle axis.

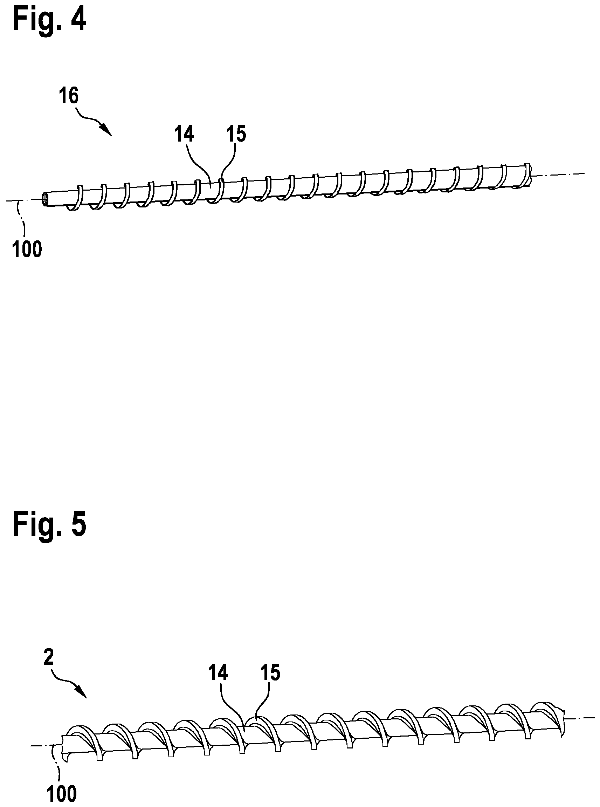

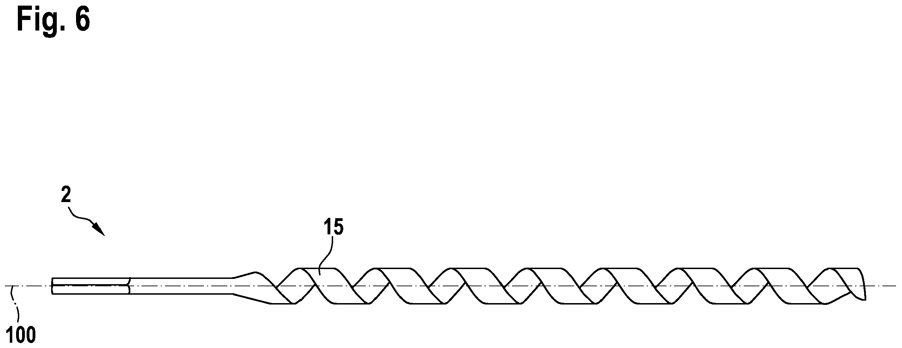

Figures 4 to 6 show different kinds of screws. In figure 4, a worm screw 16 according to prior art is shown. This worm screw 16 is used for compressing the raw material and therefore has different zones. This means, that the diameter of a shaft 14 increases over the length of the worm screw 16 along the middle axis 100, particularly towards a distal end and that a depth of thread 15 correspondingly becomes smaller to maintain a constant outer diameter of the worm screw 16. Such a worm screw 16 is usually used in injection molding devices. Figures 5 and 6, on the other hand, show screw conveyers 2 as used in embodiments of the present invention. These screw conveyers 2 are configured to not compress the raw material but only to convey the raw material through the housing 3. While the raw material is molten by compressing it via the worm screw 16 as shown in figure 4, the raw material cannot be molten by only using the screw conveyer 2. Therefore, the above mentioned heater 13 is used to melt the raw material.

As shown in figure 5, the shaft 14 has a reduced diameter as compared to figure 4 and therefore a larger depth of thread 15. Figure 6 shows a screw conveyer 2 without any shaft 14 and with a self-holding thread 15. As particularly shown in figure 6, the distance between two adjacent thread turns along the middle axis 100 is increased as compared to the thread shown in figure 4 in order to allow mixing of the raw material thereby creating a homogenous compound. This particularly allows adding several additives to the raw material, e.g. to enhance sliding and/or nucleating and/or dispersing properties of the raw material. Additionally or alternatively, color pigments and/or filler components can be added. The raw material will be mixed with these additives when being conveyed through the housing 3 by the screw conveyer 2 to create said homogenous compound. Hence, adding additives is simplified.

Preferably, the lack of a shaft 14 causes increased thread flanks which compensates the reduced rigidity of the screw conveyer 2, which is also caused by the lack of the shaft 14. In addition, increasing the thread flanks also increases the contact surface between the screw conveyer 2 and the housing 3. Since the housing 3 preferably includes the heater 13, heat transfer between the heated housing 3 and the screw conveyor 2 is optimized. In this way, heating, and preferably melting, the raw material is improved.

### List of reference signs

- 1: extruder device
- 2: screw conveyer
- 3: housing
- 4: opening
- 5: driving element
- 6: nut
- 7: stopper
- 8: bearing
- 9: one-way clutch
- 10: drive motor
- 11: inner wall of housing
- 12: connection element
- 13: heater
- 14: shaft
- 15: thread
- 16: worm screw according to prior art

- 100: middle axis

## Claims

1. Extruder device (1) comprising a screw conveyer (2) extending along a middle axis (100) and being provided within a housing (3) in an axial movable manner, a driving element (5) for moving the screw conveyer (2) in the axial manner, and a heater (13) for heating raw material, the screw conveyer (2) being configured to convey the raw material through the housing (3) and to extrude the raw material via an opening (4) of the housing (2) when being rotated around the middle axis (100) in a working direction and the screw conveyer (2) being configured to stop extruding the raw material when being axially moved away from the opening (4) to decrease pressure inside the housing (2).

2. Extruder device (1) according to claim 1, **characterized in that** a wall thickness of the housing is between 0.5 mm and 10.0 mm, preferably between 1.0 mm and 5.0 mm, more preferably between 1.5 mm and 3.0 mm.

3. Extruder device (1) according to any one of the preceding claims, **characterized in that** a length of the screw conveyer (2) is at least 5 times, preferably at least 10 times, the diameter of the screw conveyer (2).

4. Extruder device (1) according to any one of the preceding claims, **characterized in that** the screw conveyer (2) is configured to generate a pressure within the housing (3) lower than 100 bar, preferably lower than 50 bar, more preferably lower than 10 bar.

5. Extruder device (1) according to any one of the preceding claims, **characterized in that** a flow rate through the opening (4) is at least 100 g/h, preferably at least 250 g/h, more preferably at least 500 g/h.

6. Extruder device (1) according to any one of the preceding claims, **characterized in that** a cross sectional area of the screw conveyer (2) is constant along the middle axis (100).

7. Extruder device (1) according to any one of the preceding claims, wherein
• the driving element (5) is guided in a corresponding nut (6),
• the nut (6) is fixed to the screw conveyer (2) such that axial movement of the nut (6) and the screw conveyer (2) along the middle axis (100) is coupled and rotational movement of the nut (6) and the screw conveyer (2) is coupled at least in the working direction, and
• the driving element (5) has a stopper (7) for blocking relative movement of the driving element (5) and the nut (6) when the driving element (5) is rotated in the working direction and when the driving element (5) and the nut (6) are arranged in a predetermined relative position.

8. Extruder device (1) according to claim 7, **characterized in that** the predetermined relative position is such that the stopper (7) abuts the nut (6) or a part of the screw conveyer (2).

9. Extruder device (1) according to claim 8, **characterized in that** the stopper (7) comprises an axial bearing (8) for abutting the nut (6).

10. Extruder device (1) according to any one of the claims 7 to 9, **characterized in that** the stopper (7) is provided at an end of the driving element (5) facing the screw conveyer (2).

11. Extruder device (1) according to any one of the claims 7 to 10, **characterized in that** a one-way clutch (9) is provided between the nut (6) and a non-moving element, the one-way clutch (9) allowing rotation in in the working direction only.

12. Extruder device (1) according to any one of the preceding claims, **characterized in that** the screw conveyer (2) and the driving element (5) are arranged in a coaxial manner along the middle axis (100).

13. Extruder device (1) according to any one of the preceding claims, **characterized in that** the housing (2) comprises an inner wall (11) facing the screw conveyer (2), wherein the inner wall (11) is textured and/or perforated and/or has a friction-increasing coating.

14. Extruder device (1) according to claim 13, **characterized in that** the inner wall (11) is textured and/or perforated and/or provided with a friction-increasing coating by engrailing and/or knurling and/or milling and/or etching and/or coating and/or threading and/or punching and/or lasing and/or plasma treating and/or plasma coating and/or flame spraying and/or cold spraying and/or laser coating and/or electrode beam treating and/or electron beam coating.

15. Extruder device (1) according to any one of the preceding claims, **characterized in that** the driving element is a ballscrew and/or that a ratio between thread depth and thread width of the screw conveyer (2) is between 0.2 and 5.
